# EUROPEAN PATENT SPECIFICATION

(11) **EP 1 661 058 B1**
(45) Date of publication and mention of the grant of the patent: **19.12.2007**
(21) Application number: 04769167.0
(22) Date of filing: 24.08.2004
(51) Int. Cl.: G06K 9/00

(54) **BIOMETRICAL IDENTIFICATION DEVICE**
BIOMETRISCHE IDENTIFIKATIONSEINRICHTUNG
DISPOSITIF D'IDENTIFICATION BIOMETRIQUE

(30) Priority: 29.08.2003 EP 03300101
(43) Date of publication of application: 31.05.2006
(73) Proprietor: Koninklijke Philips Electronics N.V., 5621 BA Eindhoven (NL)
(72) Inventor: HENDRIKS, Robert c/o Société Civile SPID, F-75008 Paris (FR); TUYLS, Pim, Theo, F-75008 Paris (FR); LUCASSEN, Gerhardus, F-75008 Paris (FR)
(74) Representative: Landousy, Christian
(86) International application number: PCT/IB2004/002740
(87) International publication number: WO 2005/022446

(56) References cited:
- EP-A- 1 162 577
- WO-A-99/06942
- WO-A-99/27489
- WO-A1-03/003280
- US-A- 5 587 533
- JOURNAL OF FORENSIC SCIENCES, vol. 40, no. 1, January 1995 (1995-01), pages 10-17, XP009042980
- STOSZ J D ET AL: "AUTOMATED SYSTEM FOR FINGERPRINT AUTHENTICATION USING PORES AND RIDGE STRUCTURE" PROCEEDINGS OF THE SPIE, SPIE, BELLINGHAM, VA, US, vol. 2277, 28 July 1994 (1994-07-28), pages 210-223, XP008008184 ISSN: 0277-786X

## Description

### Field of the invention

The invention relates to a biometrical identification device. The invention also relates to a method being implemented by such a device.

The invention is particularly relevant in the domain of access control based on biometry.

### Background of the invention

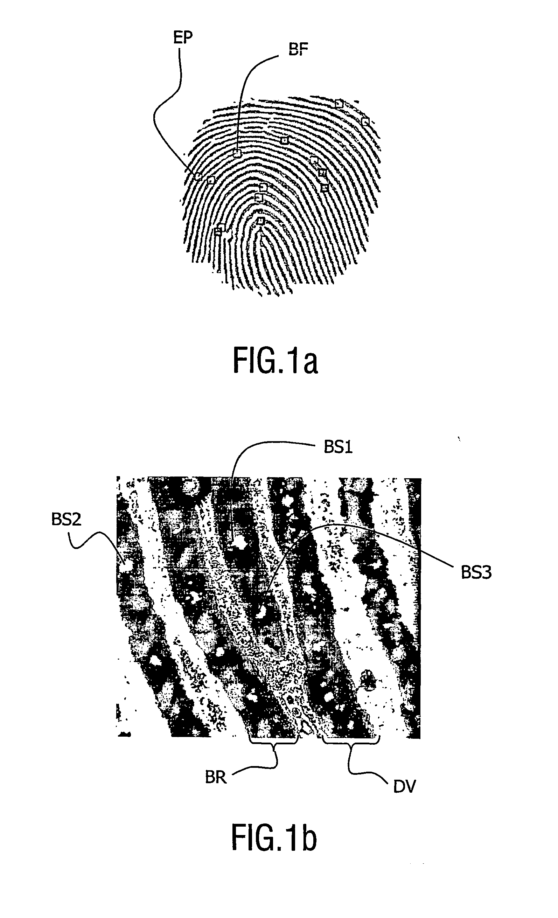

The skin on the inside of a finger is covered with a pattern of ridges and valleys, as shown in Fig. 1 a. Already centuries ago it was studied whether these patterns were different for every individual, and indeed every person is believed to have unique fingerprints. This makes fingerprints suitable for verification of the identity of their owner. Most recognition systems use specific characteristics in the pattern of ridges. These characteristics are a consequence from the fact that the ridges in the fingerprint pattern are not continuous lines but lines that end, split into forks, or form an island. These special points are called minutiae or macrofeatures. Although in general a fingerprint contains about a hundred minutia, the fingerprint area that is scanned by a sensor usually contains about 30 or 40 minutia.

When a biometrical verification is to occur, a scan of the fingerprint of a person is made and compared with stored characteristics of a reference fingerprint. A first problem when using biometrical identification based on the basis of fingerprints is the fact that none of the fingerprint scanners that are currently available can distinguish between a finger and a well-created dummy. A second problem is that such biometrical identification systems have non-zero false accept and false reject rates.

Sweat pores are naturally occurring physical characteristics of the skin, which exist upon the ridges of the fingerprint and provide additional patterns for biometrical identification. The paper entitled "Fingerprint Imaging with a Confocal Scanning Laser Macroscope", by Beesley at al, Journal of Forensic Sciences, Vol. 40, No. 1, January 1995, pp. 10-17, discloses a fingerprint imaging method according to which intra-skin fingerprint images (optical tomography) comprising macrofeatures (minutiae) and sweat pores are acquired by means of a scanning laser macroscope. The paper entitled « Automated system for fingerprint authentication using pores and ridge structure", by J. D. Stosz et al., SPIE, Bellingham, VA, US, vol. 2277, 28 July 1994, or Patent Application published under number WO99/06942 discloses a method of and a device for identifying individuals from association of finger sweat pores and macrofeatures. The method comprises obtaining from an individual during a registration process, a fingerprint image having at least one registration pore and at least one registration macrofeature. Registration pore data is derived from the registration pores and registration macrofeature data is derived from the registration macrofeatures. In a bid step, a fingerprint image having at least one bid pore and at least one bid macrofeature is obtained. Bid pore data is derived from the bid pores and bid macrofeature data is derived from the bid macro-features. Bid associated data is constructed from associating the bid pore data with the bid macrofeature data, and constructing registration associated data derived from associating the registration pore data with the registration macrofeature data. The bid associated data is compared to the registration associated data to produce a correlation score where a successful or failed identification result is produced based on comparison of the correlation score to a predetermined threshold. Such a method enables a substantial reduction of the false accept and false reject rates by associating macrofeatures and sweat pores. Moreover the method has improved fraud fighting capabilities, because sweat pore information is harder to retain on impostor fingerprints. Fingerprint duplication with cooperation is compulsory.

A first drawback of this method is that the presence of dirt and oil on the finger surface perturbates the detection of sweat pores. The obtained sweat pore data is therefore not very reliable and cannot be exploited as a unique source of identification data. A second drawback is that, although fraud is made more difficult, it is still possible.

### Summary of the invention

The object of the invention is to provide a solution for identifying an individual, which is more reliable and more resistant to fraud.

This is achieved with a biometrical identification device comprising:
- acquisition means for acquiring an intra-skin image, said intra-skin image being located inside the finger at a distance from the inside surface of the finger, said intra-skin image comprising sweat pores,
- location means for locating candidate sweat pores as isolated spots in said intra-skin image,
- matching means for matching said candidate sweat pore locations with reference pore locations of a reference intra-skin image to produce a pore matching score,
- decision means for deciding of a successful or failed pore-based identification from a comparison of the pore matching score with a predetermined pore threshold wherein the acquisition means are able to acquire a sequence of intra skin images, each intra-skin image corresponding to a particular depth within the skin of the finger, the location means and matching means being applied sequentially to each intra-skin image of the sequence so as to take the sweat pore locations of a previous image into account for searching for the sweat pores in a current intra-skin image, the decision means being able to collect the sweat pore locations coming from the successive intra-skin images of the sequence.

The acquisition means in accordance with the invention provide an intra-skin image of the individual finger. Said image is located inside the individual finger at a certain distance of the finger surface. An advantage of acquiring such an intra-skin image is to get rid of any pollution of the physical characteristics of the skin by external factors like dirt and oil. Image quality and visibility of physical characteristics are greatly improved.

Such an intra-skin image not only shows the classical pattern of ridges and valleys of a conventional fingerprint, but also the sweat pores with an enhanced visibility. The pore locating means exploit this enhanced visibility for locating candidate sweat pores either as isolated bright spots on a dark background or as isolated dark spots on a bright background. The candidate sweat pore locations are matched with reference sweat pore locations in order to produce a pore matching score. If said pore matching score is greater than a predetermined pore threshold, the individual finger is considered as the actual one. If not, it is considered as an impostor.

Sweat pores are known to those skilled in the art as permanent, immutable and individual characteristics. By acquiring a very clean intra-skin image showing the sweat pores with an enhanced visibility, the biometrical identification device in accordance with the invention therefore provides a very reliable identification of an individual finger, which is only based on said sweat pores.

In addition, fraud is made very difficult by the biometrical identification device in accordance with the invention, because acquiring an intra-skin image located at a certain distance inside the individual finger is not as simple to implement as acquiring a superficial image of the fingerprint.

### Brief description of the drawings

The invention will be further described with reference to the accompanying drawings:
- Fig. 1a shows a conventional fingerprint,
- Fig. 1b shows a zoom on an intra-skin image in accordance with the invention,
- Fig. 2 shows a flow chart diagram of a biometrical identification device in accordance with a first embodiment of the invention,
- Fig. 3 is a schematic diagram of the acquisition means in accordance with the invention,
- Fig. 4 shows a flow chart diagram of a biometrical identification device in accordance with a second embodiment of the invention,
- Fig. 5a shows a schematic view of an intra-skin image comprising ridges, fingerprint macrofeatures and sweat pores,
- Fig. 5b shows a schematic view of a search area of sweat pores around a macrofeature location within the intra-skin image,
- Fig. 6 is a schematic diagram of the biometrical identification device in accordance with a third embodiment of the invention,
- Fig. 7a and 7b show a searching area centered on a macrofeature of a fingerprint ridge for searching sweat pores in accordance with a second embodiment of the invention,
- Fig. 8 is a schematic diagram of the biometrical identification device in accordance with a fourth embodiment of the invention.

### DETAILED DESCRIPTION OF THE INVENTION

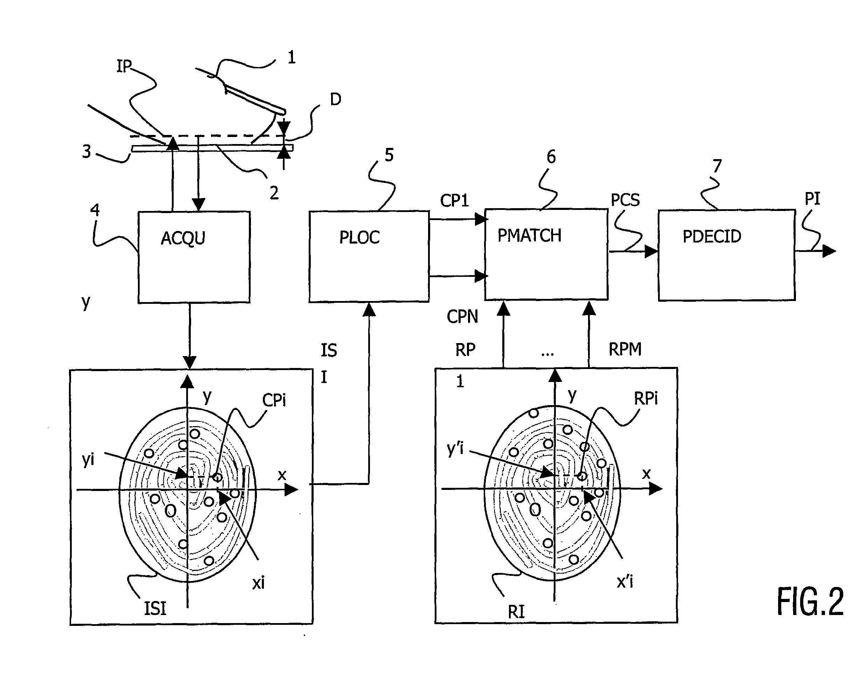

Referring to Fig. 2, an inside surface 2 of an individual finger 1 is pressed on a plate 3 of acquisition means 4. Said acquisition means 4 are intended to acquire an intra-skin image ISI of an image plane IP of the finger 1, said image plane IP being located inside the finger 1 at a distance D from the inside surface 2. Said distance D from the inside surface 2 of the finger is advantageously chosen greater than 0.1 and less than 0.5 mm.

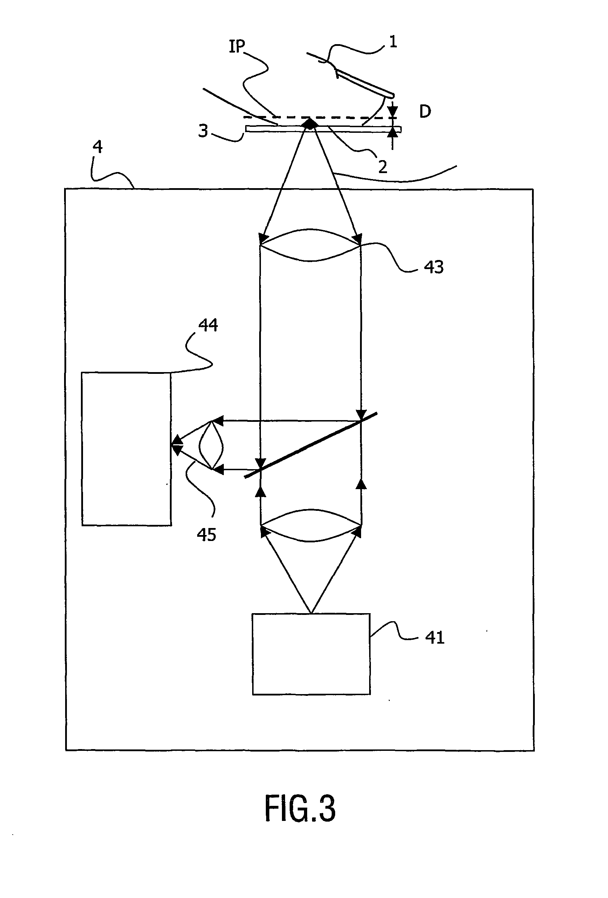

The acquisition means 4 presented in Fig. 3 comprise a radiation source 41 for generating a radiation beam 42, such as, for instance, a laser beam. The acquisition means 4 further comprise focusing means 43, for instance an objective lens, for focusing the radiation beam 42 on the image plane IP inside the finger 1. The acquisition means 4 finally comprise detection means 44 for detecting a reflected radiation beam, said reflection beam 45 being reflected from the image plane IP.

Preferably, the acquisition means 4 comprise a confocal microscope, which form an image from an emitted laser light, but it will be apparent to a person skilled in the art that the invention also concerns any equivalent system capable of producing such an image ISI of the image plane IP, for instance a medical X ray system.

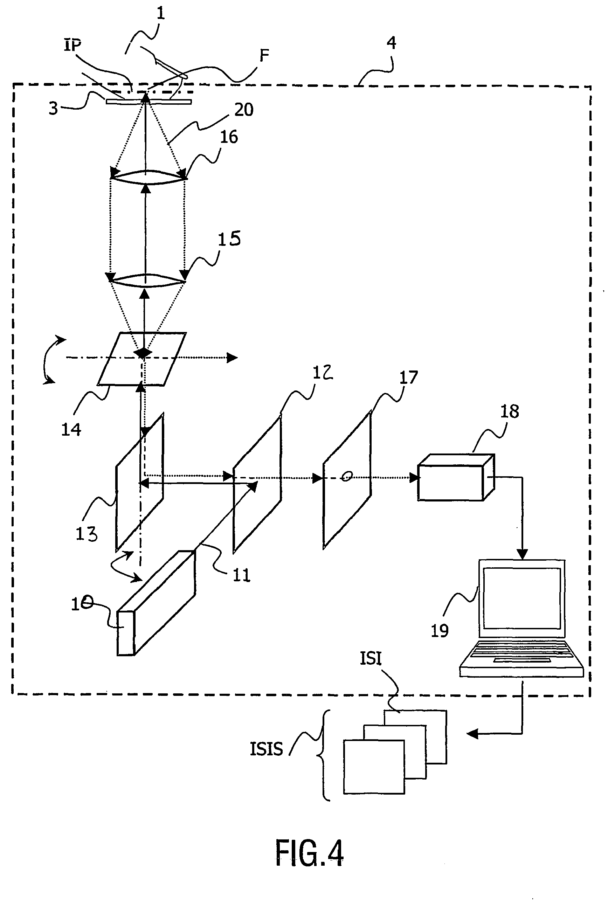

Fig. 4 describes in a schematic way how the intra-skin image ISI is formed by the acquisition means when a confocal microscope is used. Such a confocal microscope comprises:
- a laser source 10 which provides an excitation light 11,
- a dichroic mirror 12, which reflects light shorter than a certain wavelength and passes light longer than that wavelength,
- scanning mirrors 13 and 14 mounted on motors,
- a collimator lens 15, which makes laser rays parallel,
- an objective lens 16 having a focal point F, which is located in the image plane IP into the skin of the finger 1 (the objective lens 16 has a focal plane which is identical to the image plane IP),
- a confocal pinhole 17, whose plane is conjugate to focal plane of the objective lens 16,
- a detector 18,
- a computer 19.

The laser source 10 produces the excitation light 11, which reflects off the dichroic mirror 12. From there the excitation light 11 hits the two scanning mirrors 13 and 14, which scan the excitation light 11 across the finger 1. The finger 1 reemits some reemitted light 20, which is descanned by the scanning mirrors 14 and 13, passes through the dichroic mirror 12 and is focused onto the confocal pinhole 17. Since the focal plane of the objective lens 16 is conjugate to the pinhole plane, only the light reflected by the finger at the focal point passes the pinhole. The reflected light 20 that passes through the confocal pinhole 17 is measured by the detector 18, for instance a photomultiplier tube. Light which is reflected by the focal plane but not at the focal point is blocked by the pinhole. Consequently, at any given instant, only one point of the image plane of the finger 1 is observed. The detector 18 is attached to the computer 19 which builds up the intra-skin image ISI one pixel at a time.

An advantage of such a confocal microscope is to reject out of focus reflected light. The practical effect is that a thin section of the finger is imaged. In other words, the confocal microscope has a small depth of field. By scanning many thin sections through the finger 1, a very clean three dimensional intra-skin mage or image sequence ISIS of the finger 1 can be built up.

It should be noted that a pick-up unit of a CD drive can be used as a confocal microscope. An advantage of such a solution is to be very cheap, especially in comparison with conventional systems using a CCD camera.

Fig. 1b shows a zoom on an area of an intra-skin image ISI produced by a device in accordance with the invention. Said zooming area comprises bright ridges BR and dark valleys DV, which look rather similar to those of Fig. 1a, but with an inverted contrast. Unlike the ink-based fingerprint of Fig. 1a, the bright ridges of Fig. 1b correspond to furrows of the finger surface and the dark valleys of Fig. 1b to the ridges of the finger surface. Said intra-skin image ISI comprises in addition to the classical ink-based fingerprint of Fig. 1a a plurality of isolated bright spots BS₁, BS₂, BS₃, which correspond to sweat pores. In the zooming area of Fig. 1b, said sweat pores are therefore located inside the dark valleys.

It is to be noted that the acquisition means could as well provide an intra-skin image with an inverted contrast, that is with isolated dark spots on a bright background.

It should be noted that the intra-skin image ISI roughly comprises 10 pores /mm².

Referring to Fig. 2, the device in accordance with the invention further comprises location means 5 for locating said isolated bright spots in the intra-skin image ISI.

In a first embodiment of the invention, said location means 5 are intended to locate candidate sweat pores independently from any other feature of the fingerprint like for instance fingerprint macrofeatures. The location means 5 for instance implement a thresholding technique in order to extract the candidate sweat pores from the darker background. Such a thresholding technique keeps the pixels of the image ISI, which are greater than a predetermined contrast threshold, while forcing to zero the pixels whose values are less than said predetermined contrast threshold. Such a technique, well known to a person skilled in the art, leads to a binarization. A binary image is produced. An appropriate value of said contrast threshold is empirically fixed, so that most of the bright spots corresponding to actual sweat pores are kept, while most of the bright spots corresponding to false alarms are rejected. It is to be noted that the use of thresholding is made possible by the fact that the isolated bright spots are well contrasted on the darker background. However, the invention is not limited to such a thresholding technique. The locating means 5 may also comprise filtering sub-means based for instance on a circular filter, which detects bright circular shapes having a contrast value and a diameter included into predetermined ranges of values.

Preferably, said location means 5 further comprise thinning sub-means in order to get candidate sweat pores of one pixel width. Thinning techniques used by the thinning sub-means are well known to a person skilled in the art. Consequently, considering a referential (O, x, y), the location means 5 output a set of candidate sweat pore locations CP₁(x₁,y₁), CP₂(x₂,y₂),..., CP_{N}(xₙ,yₙ), where n is an integer.

Matching means 6 then match said candidate sweat pore locations CP₁ to CP_{N} with reference pore locations RP₁ to RP_{M}, where M is an integer, of a reference intra-skin image RI.

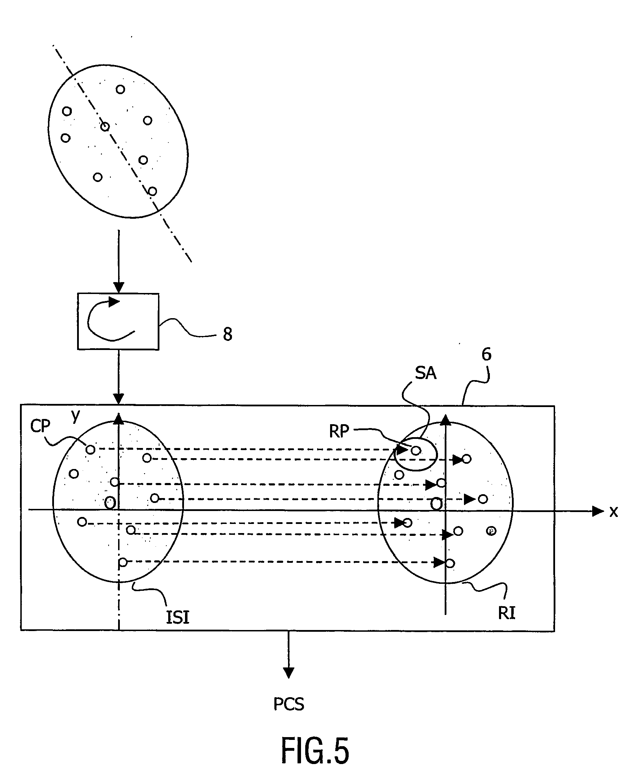

Fig. 5 describes in a schematic way a possible technique for matching the candidate sweat pore locations CP₁ to CP_{N} with the reference pore locations RP₁ to RP_{M}. Said matching technique consists in searching for a reference pore RP of the reference image RI within a searching area SA centered on the position (xᵢ,yᵢ) of a candidate pore CP of the intra-skin image ISI. Such an operation is repeated for each candidate pore of the intra-skin image ISI. A pore matching score PMS is produced in the following way: said pore matching score PMS is initialized to zero. If a reference pore RP is found within the search area SA, the pore matching score PA is incremented by 1.

It should be noted that only the list of reference pore locations RP₁ to RP_{M} can be stored in a memory of the biometry identification device in accordance with the invention, and not necessarily the whole reference image RI.

Decision means 7 further compare the pore matching score PMS with a predetermined pore threshold so as to decide whether the identification based on the intra-skin image ISI is valid or not. Such a predetermined pore threshold has a value, which is empirically chosen, in order to eliminate impostor fingers but not true fingers.

It should be noted that the intra-skin image ISI and the reference image RI may have been acquired with different settings like for instance a different orientation of the individual finger, as shown in Fig. 5. In this case, a coordinate transformation 8 consisting of a translation, scaling or rotation is needed, in order to facilitate the matching between the candidate intra-skin image ISI and the reference image RI.

An advantage of the first embodiment of the invention is to propose a solution for identifying an individual finger from analyzing only the candidate sweat pores contained in the intra-skin image. An advantage of acquiring such an intra-skin image is to get rid of perturbations due to dirt, oil and any degradation of the skin surface. Consequently, the obtained intra-skin image is of good quality and presents well-contrasted sweat pores. Another advantage is that no trace of the intra skin pattern can be found on cups or tables. The image processing techniques involved for locating and matching the sweat pores also have the advantage to be simple to implement.

As already mentioned above, the intra-skin image ISI not only comprises sweat pores but also fingerprint ridges and valleys. Said fingerprint ridges are usually characterized by macrofeatures, which are well known to a person skilled in the art. As shown in the fingerprint of Fig. 1a, macrofeatures are for instance bifurcations BF and end points EP of the fingerprint ridges.

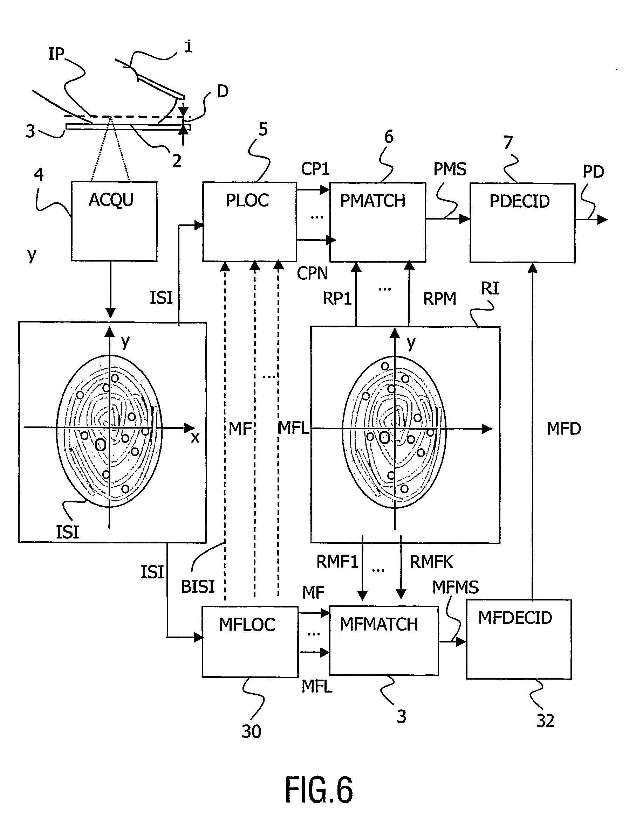

Fig. 6 presents in a functional way the biometrical identification device in accordance with a second embodiment of the invention. Said device further comprises macrofeature location means 30 for locating macrofeatures of said fingerprint ridges. Said macrofeature location means 30 for instance comprise thresholding sub-means for binarizing the intra-skin image ISI. A binary intra-skin image BISI is obtained. It should be noted that aid thresholding sub-means involve the same kind of technique as the one used by the pore locations means 5. Consequently, the thresholding sub-means can advantageously be applied once to the intra-skin image ISI and the same binary image BISI be used by both pore location means 5 and macrofeature location means 30. In this case, the binary intra-skin image BISI is sent to the pore location means 5.

It should be noted that contrast irregularities of the ridges and valleys may induce some errors when thresholding the intra-skin image. Consequently, the location of fingerprint ridges can be made more robust to errors by using anisotropic filtering sub-means before thresholding for enhancing elongated shapes within the intra-skin image. Said anisotropic filtering sub-means for instance involve morphological techniques which are well known to a person skilled in the art.

The macrofeature location means 30 further comprise thinning sub-means in order to produce one-pixel wide fingerprint structures. As well known to those skilled in the art, either a ridge skeleton graph or a valley skeleton graph can be output. Both can be used to locate macrofeatures, but it turns out that sweat pores are more easily extracted from the ridge skeleton graph, because sweat pores are located in the valleys. Therefore a ridge skeleton graph is output. The macrofeature location means 30 further comprise analysis sub-means which consist in analyzing each vertex of a ridge in order to determine whether it is a macrofeature (bifurcation or end point) or not. Such an analysis is performed in a searching area, and is in particular based on length criteria. For instance, too short ridges are rejected.

The macrofeature location sub-means finally output locations of the extracted macrofeatures MF₁ to MF_{L}, where L is an integer.

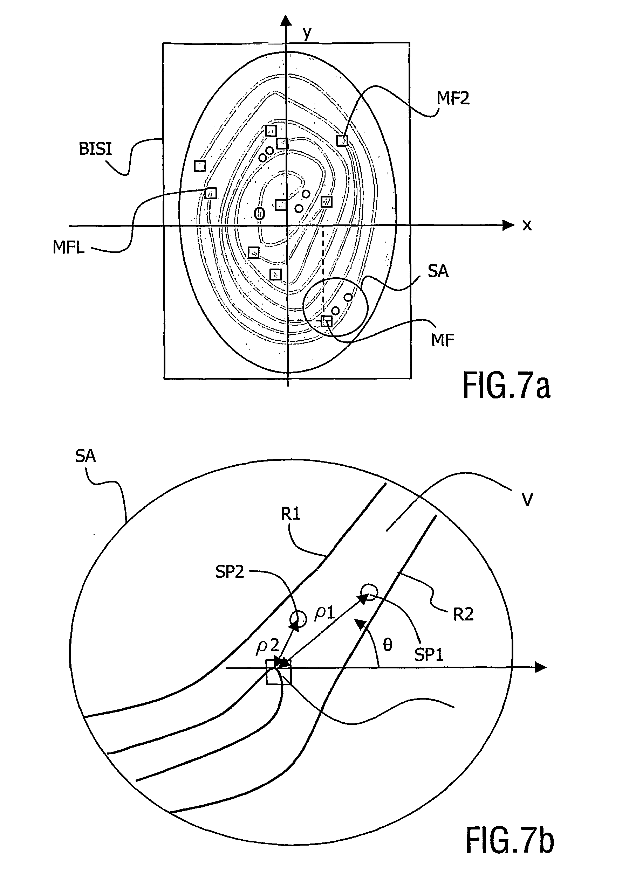

Fig. 7a is a schematic view of the binary intra-skin image BISI. Said binary intra-skin image BISI comprises the macrofeature locations MF₁ to MF_{L}.

The device in accordance with a second embodiment of the invention further comprises macro-feature matching means 31 for matching said macro-feature locations MF₁ to MF_{L} with reference macrofeature locations RMF₁ to RMF_{K}, where K is an integer, to produce a macro-feature matching score MFMS. The reference macrofeature locations RMF₁ to RMF_{K} come from the reference image RI and are stored in a memory of the biometrical identification device in accordance with the invention. Said macrofeature matching score MFMS is compared with a predetermined macrofeature threshold MFT by macrofeature decision means 32, which output a macrofeature based decision MFD. If the macrofeature matching score MFMS is greater than the predetermined macrofeature threshold MFT, the macrofeature based decision MFD considers the identification of the individual finger based on macrofeatures as valid, if not the identification is considered as failed.

The macrofeature locations MF₁ to MF_{L} are advantageously exploited by the pore location means 5 in the following way: instead of searching for pores in the whole intra-skin image ISI, which may be rather time consuming, searching areas SA are delimitated around the macrofeature locations MF₁ to MF_{L}. In other words, said macrofeature locations MF₁ to MF_{L} are used as starting points for locating the sweat pores.

Fig. 7b is a schematic view of a searching area SA centered around the macrofeature location MF₁ for locating sweat pores in the intra-skin image ISI. A sweat pore SP₁ is located at a distance ρ₁ from the macrofeature location MF₁. Said sweat pore SP₁ can be advantageously located with respect to the macrofeature location MF₁ using polar coordinates (pi, θ₁).

As well, the macrofeature based decision MFD is advantageously exploited by the pore decision means 7 in order to take the pore-based decision PD. Several alternatives are possible. For instance, a failed identification of macrofeatures could be considered as prevailing over a valid identification of pores, because the macrofeatures are more specific and easier to identify with certainty than the punctual sweat pores. In the contrary, a valid identification of macrofeatures needs to be completed by a valid identification of pores in order to get a more secure decision.

An advantage of the second embodiment of the invention is to exploit the fact that the fingerprint macrofeatures are easy to detect in order to make the location of sweat pores more robust to errors. Macrofeature locations facilitate a mapping of the intra-skin image ISI with the reference image RI.

In a third embodiment, the biometrical identification device in accordance with the invention produces a sequence of intra-skin images. Said sequence of intra-skin images forms a three dimensional intra-skin image, in which each intra-skin image corresponds to a particular depth within the skin of the finger. The location means 5 and matching means 6 are applied to each intra-skin image of the sequence, preferably sequentially so as to take the pore locations of a previous image into account for searching for the sweat pores in a current intra-skin image. The decision means 7 collect the sweat pore locations coming from the successive intra-skin images of the sequence. Possibly, said decision means assign a reliability measure to the sweat pore locations, depending on a continuity of presence of the sweat pore all along the sequence and takes the final pore based decision on the basis of such a reliability measure. An advantage of the third embodiment of the invention is thus to provide a more robust location of the sweat pores and consequently to allow a more secure identification of the individual finger.

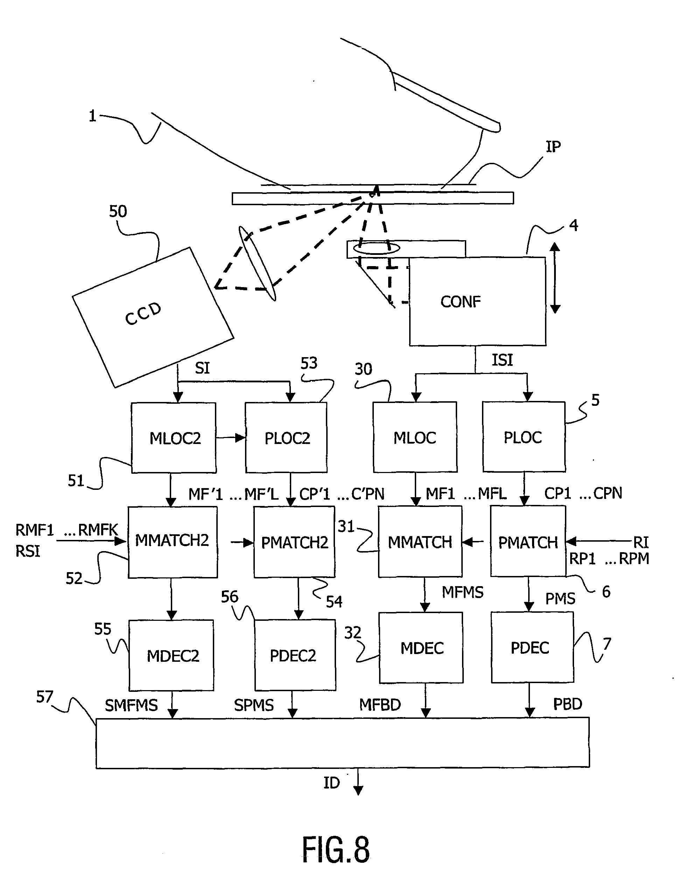

Referring to Fig. 8, a biometrical identification device in accordance with a fourth embodiment of the invention comprises second acquisition means 50 for acquiring a superficial fingerprint image SI of the inside surface 2 of the finger 1. Said second acquisition means 50 for instance comprise a CCD camera. The superficial image SI comprises fingerprint ridges and valleys and pores. As already mentioned above, the main difference with the intra-skin image ISI is that the superficial image SI is noisier, which is due to on the presence of oil and dirt on the finger surface. The biometrical device in accordance with the fourth embodiment of the invention further comprises second macrofeature location means 51 for locating macrofeatures located on the fingerprint ridges of the superficial image SI. Second macrofeature locations RMF'₁ to RMF'_{L}, where L is an integer, are output The biometrical device in accordance with the fourth embodiment of the invention further comprises second macrofeature matching means 52 for matching said second macrofeature locations with second reference macrofeature locations RMF'₁ to RMF'_{K}, where K is an integer, of a reference superficial image RSI, so as to produce a superficial macrofeature matching score (SMFMS). The image processing techniques involved are very similar to those involved in the macrofeature location means 30 and the macrofeature matching means 31 and are well-known to a person skilled in the art.

The biometrical device in accordance with the fourth embodiment of the invention further comprises second pore location means 53 for locating the sweat pores as isolated bright spots in said superficial image (SI) with respect to the second macrofeature locations MF'₁ to MF'_{L}. For instance, the sweat pores are searched in a searching area centered around a second macrofeature location. Second sweat pore locations CP'₁ to CP'_{N}, where N is an integer are output. The biometrical device in accordance with the fourth embodiment of the invention further comprises second pore matching means 54 for matching said pore locations CP'₁ to CP'_{N} with second reference pore locations RP'₁ to RP'_{M}, where M is an integer, of said reference superficial image (RSI), so as to produce a superficial pore matching score (SPMS). The techniques involved in the second pore location means 53 and in the second pore matching means 54 are enhancement, thresholding, thinning and matching techniques, which are well known to a person skilled in the art. However, the presence of noise makes the detection of macrofeatures and pores more difficult. To circumvent this issue, denoising techniques, well known to a person skilled in the art may advantageously be used. A superficial pore matching score SPMS is output.

The superficial macrofeature matching score SMFMS and the superficial pore matching score SPMS are exploited by second macrofeature decisions means 55 and second pore decision means 56, respectively. In the same way as described above for macrofeature decision means 32 and pore decision means 7, said second macrofeature decisions means 55 and second pore decision means 56 compare the superficial macrofeature matching score SMFMS and the superficial pore matching score SPMS with predetermined macrofeature and pore thresholds, respectively. A superficial macrofeature based decision SMFBD and a superficial pore based decision SPBD are taken.

The biometrical identification device in accordance with the fourth embodiment of the invention finally comprises global decision means 57 for deciding whether the identification ID of the individual finger 1 is valid or not. Such a global decision is taken using the macrofeature matching score MFMS, the pore matching score PMS, the superficial macrofeature matching score SMFMS and the superficial pore matching score SPMS.

A first advantage of the system in accordance with a fourth embodiment of the invention is provide a more secure identification, which is obtained from two different image acquisition modes of the fingerprint. A second advantage is to make fraud even more difficult.

The biometrical identification system in accordance with the invention is particularly useful for access control in a building entrance. However, such a system can also be used for mobile identity control, for instance by the Police. In this case, the intra-skin image ISI may be produced by a portable device, which is separated from the biometrical identification system. Therefore, a device for producing an intra-skin image ISI of an individual finger 1 in accordance with the invention comprises placement means for placing an inside surface 2 of the individual finger 1 in front of acquisition means. Said acquisition means further acquire the intra-skin image, which is located inside the finger at a distance (D) from the inside surface (2) of the finger. The intra-skin image ISI is finally stored by storage means into a memory. The intra-skin image ISI may then be transmitted to the locating means, matching means and decision means of the biometrical identification device in accordance with the invention for instance via a network connection. It should be noted that the transmission may advantageously be encrypted.

The biometrical identification device in accordance with the invention implements a method for identifying an individual finger. Said method comprises a step of acquiring at least an intra-skin image (ISI) of the individual finger, said intra-skin image being located at a distance inside the finger and comprising sweat pores. The method in accordance with the invention further comprises a step of locating the sweat pores as isolated bright spots in said intra-skin focused image ISI, a step of matching the pore locations CP₁ to CP_{N} with reference pore locations RP₁ to RP_{M} of a reference intra-skin focused image to produce a pore matching score PMS and finally a step of deciding of a successful or failed pore-based identification (PI) from a comparison of the pore correlation score (PCS) with a first predetermined threshold.

It should be noted that the above-mentioned embodiments illustrate rather than limit the invention, and that those skilled in the art will be able to design many alternative embodiments without departing from the scope of the appended claims. In this respect the following closing remarks are made: there are numerous ways of implementing functions by means of items of hardware or software, or both. In this respect, the drawings are very diagrammatic, each representing only one possible embodiment of the invention. Thus, although a drawing shows different functions as different blocks, this by no means excludes that a single item of hardware or software carries out several functions, nor does it exclude that a single function is carried out by an assembly of items of hardware or software, or both. In the claims, any reference signs places between parentheses shall not be construed as limiting the claims. The word "comprising" does not exclude the presence of elements or steps other than those listed in a claim. The word "a" or "an" preceding an element does not exclude the presence of a plurality of such elements. The mere fact that certain measures are recited in mutually different dependent claims does not indicate that a combination of these measures cannot be used to advantage.

## Claims

1. A biometrical identification system for identifying an individual finger (1), said finger comprising an inside surface (2), said device comprising:
- acquisition means (4) for acquiring an intra skin image (ISI), said intra skin image being located inside the finger at a distance (D) from the inside surface (2) of the finger, said intra skin image comprising sweat pores (P1, P2, P3),
- location means (5) for locating said sweat pores as isolated spots in said intra-skin image (ISI),
- matching means (6) for matching said pore locations (CPI-CPN) with reference pore locations (RPI-RPM) of a reference intra skin image (RI) to produce a pore correlation score (PCS),
- decision means (7) for deciding of a successful or failed pore-based identification (PI) from a comparison of the pore matching score (PMS) with a predetermined pore threshold
wherein the acquisition means (4) are able to acquire a sequence of intra skin images, each intra-skin image corresponding to a particular depth within the skin of the finger, the location means (5) and matching means (6) being applied sequentially to each intra-skin image of the sequence so as to take the sweat pore locations of a previous image into account for searching for the sweat pores in a current intra-skin image, the decision means (7) being able to collect the sweat pore locations coming from the successive intra-skin images of the sequence.

2. A biometrical identification device as claimed in claim 1, wherein said intra-skin image comprises fingerprint ridges and said device further comprises:
- macrofeature location means (30) for locating macro-features located on said fingerprint ridges,
- macrofeature matching means (31) for matching said macro-feature locations (MF₁-MF_{L}) with reference macro feature locations (MF'₁-MF'_{K}) to produce a macro-feature matching score (MFMS),
- macrofeature decision means (32) for deciding successful or failed macrofeature-based identification (MFD) from a comparison of the macrofeature matching score (MFMS) with a predetermined macrofeature threshold.

3. A biometrical identification device as claimed in claim 2, wherein the pore location means are intended to locate the sweat pores with respect to the macrofeatures.

4. A biometrical identification device as claimed in claim 1, wherein the acquisition means (4) comprise:
- a radiation source (41) for generating a radiation beam (42),
- focusing means (43) for focusing said radiation beam (42) at the distance (D) from the inside surface (2) of the finger (1),
- detecting means (44) for detecting a reflected radiation beam (45) reflected by the finger (1).

5. A biometrical identification device as claimed in claim 4, wherein the focusing distance from the inside surface of the finger is greater than 0.1 and less than 0.5 mm.

6. A biometrical identification device as claimed in claim 4, wherein said acquisition means comprise a confocal microscope.

7. A biometrical identification system as claimed in claim 2, comprising:
- second acquisition means (50) for acquiring a superficial image of the inside surface (2) of the finger (1),
- second macrofeature location means (51) for locating macrofeatures located on said fingerprint ridges,
- second macrofeature matching means (54) for matching said second macro-feature locations (MF'₁-MF'_{L}) with superficial reference macrofeature locations (RMF'₁-RMF'_{K}) to produce a superficial macrofeature matching score (SMFMS),
- second macrofeature decision means (55) for deciding of a successful or failed superficial macro feature-based identification (SMFD) from a comparison of the superficial macrofeature matching score (SMFMS) with a second predetermined macrofeature threshold,
- second pore location means (51) for locating said sweat pores as isolated spots in said superficial image (SI),
- second pore matching means (52) for matching said second pore locations (CP'₁-CP'_{N}) with superficial reference pore locations (RP'₁-RP'_{M}) of a reference superficial image (RSI) to produce a superficial pore matching score (SPMS),
- second pore decision means (56) for deciding of a successful or failed superficial pore-based identification (SPFD) from a comparison of the superficial pore matching score (SPMS) with a second predetermined pore threshold,
- global decision means (57) for deciding of a successful or failed finger identification (ID) using the macrofeature-based identification (MFD), the pore-based identification (PD), the superficial macrofeature-based identification (SMFD) and the superficial pore-based identification (SPD).

8. A device as claimed in claim 1, wherein the acquisition means comprise a confocal microscope.

9. A method of identifying an individual finger (1) comprising the steps of:
- acquiring (4) at least an intra-skin image (ISI) of the individual finger, said intra-skin image being located at a distance (D) inside the finger and comprising pores,
- locating (5) said pores as isolated spots in said intra-skin focused image,
- matching (6) said pore locations with reference pore locations of a reference intra skin focused image to produce a correlation score,
- deciding (7) of a successful or failed pore-based identification (PI) from a comparison of the pore matching score (PMS) with a predetermined pore threshold
wherein the acquisition step (4) is able to acquire a sequence of intra skin images, each intra-skin image corresponding to a particular depth within the skin of the finger, the location step (5) and matching step (6) being applied sequentially to each intra-skin image of the sequence so as to take the sweat pore locations of a previous image into account for searching for the sweat pores in a current intra-skin image, the decision step (7) being able to collect the sweat pore locations coming from the successive intra-skin images of the sequence.

## Patentansprüche

1. Biometrisches Identifikationssystem zum Identifizieren eines einzelnen Fingers (1), der eine Innenfläche (2) umfasst, wobei die genannte Einrichtung Folgendes umfasst:
- Erfassungsmittel (4) zum Erfassen eines Intrakutanbildes (ISI), wobei sich das genannte Intrakutanbild innerhalb des Fingers in einer Entfernung (D) von der Innenfläche (2) des Fingers befindet und genanntes Intrakutanbild Schweißporen (P1, P2, P3) umfasst;
- Lokalisierungsmittel (5) zum Lokalisieren der genannten Schweißporen als einzelne Punkte in dem genannten Intrakutanbild (ISI),
- Abgleichmittel (6) zum Abgleichen genannter Porenpositionen (CPI-CPN) mit Positionen von Referenzporen (RPI-RPM) eines Referenz-Intrakutanbildes (RI), um ein Porenkorrelationsergebnis (PCS) zu erzielen,
- Entscheidungsmittel (7), um anhand eines Vergleichs des Ergebnisses desn Porenabgleichs (PMS) mit einem vorgegebenen Porenschwellenwert über eine erfolgreiche oder fehlgeschlagene porenbasierte Identifizierung (PI) zu entscheiden, wobei die Erfassungsmittel (4) in der Lage sind, eine Folge von Intrakutanbildern zu erfassen, bei der jedes Intrakutanbild einer bestimmten Tiefe in der Haut des Fingers entspricht, wobei die Lokalisierungsmittel (5) und Abgleichmittel (6) nacheinander auf jedes Intrakutanbild der Folge angewandt werden, um die Positionen der Schweißporen eines vorhergehenden Bildes beim Suchen der Schweißporen in einem aktuellen Intrakutanbild zu berücksichtigen, und wobei die Entscheidungsmittel (7) in der Lage sind, die Positionen der Schweißporen aus den aufeinanderfolgenden Intrakutanbildern der Folge zu erfassen.

2. Biometrische Identifikationseinrichtung nach Anspruch 1, wobei das genannte Intrakutanbild Papillarlinien des Fingerabdrucks umfasst und die genannte Einrichtung darüber hinaus Folgendes umfasst:
- Makrofeature-Lokalisierungsmittel (30) zum Lokalisieren der Makrofeatures, die sich auf den genannten Papillarlinien des Fingerabdrucks befinden,
- Makrofeature-Abgleichmittel (31) zum Abgleichen der genannten Makrofeaturepositionen (MF₁-MF_{L}) mit Referenz-Makrofeaturepositionen (MF'₁-MF'_{K}), um ein Makrofeature-Abgleichergebnis (MFMS) zu erzielen,
- Makrofeature-Entscheidungsmittel (32), um anhand eines Vergleichs des Makrofeature-Abgleichergebnisses (MFMS) mit einem vorgegebenen Makrofeatureschwellenwer über eine erfolgreiche oder fehlgeschlagene auf Makrofeatures basierende Identifizierung (MFD) zu entscheiden.

3. Biometrische Identifikationseinrichtung nach Anspruch 2, wobei die Porenlokalisierungsmittel dazu vorgesehen sind, die Schweißporen in Bezug auf die Makrofeatures zu lokalisieren.

4. Biometrische Identifikationseinrichtung nach Anspruch 1, wobei die Erfassungsmittel (4) Folgendes umfassen:
- eine Strahlungsquelle (41) zum Erzeugen eines Strahlenbündels (42),
- Fokussiermittel (43) zum Fokussieren des genannten Strahlenbündels (42) in der Entfernung (D) von der Innenfläche (2) des Fingers (1),
- Detektionsmittel (44) zum Detektieren eines reflektierten Strahlenbündels (45), das vom Finger (1) reflektiert wird.

5. Biometrische Identifikationseinrichtung nach Anspruch 4, wobei die Fokussierentfernung von der Innenfläche des Fingers größer als 0,1 und kleiner als 0,5 mm ist.

6. Biometrische Identifikationseinrichtung nach Anspruch 4, wobei die genannten Erfassungsmittel ein konfokales Mikroskop umfassen.

7. Biometrisches Identifikationssystem nach Anspruch 2, das Folgendes umfasst:
- zweite Erfassungsmittel (50) zum Erfassen eines Oberflächenbildes der Innenfläche (2) des Fingers (1),
- zweite Makrofeature-Lokalisierungsmittel (51) zum Lokalisieren der Makrofeatures, die sich auf den genannten Papillarlinien des Fingerabdrucks befinden,
- zweite Makrofeature-Abgleichmittel (54) zum Abgleichen der genannten zweiten Makrofeaturepositionen (MF'₁-MF'_{L}) mit Positionen der Referenzoberflächenmakrofeatures (RMF'₁-RMF'_{K}), um ein Abgleichergebnis der Oberflächenmakrofeatures (SMFMS) zu erzielen,
- zweite Makrofeature-Entscheidungsmittel (55), um anhand eines Vergleichs des Abgleichergebnisses (SMFMS) der Oberflächenmakrofeatures mit einem zweiten vorgegebenen Makrofeatureschwellenwert über eine erfolgreiche oder fehlgeschlagene auf Oberflächenmakrofeatures basierende Identifizierung (SMFD) zu entscheiden,
- zweite Poren-Lokalisierungsmittel (51) zum Lokalisieren der genannten Schweißporen als einzelne Punkte in dem genannten Oberflächenbild (SI),
- zweite Poren-Abgleichmittel (52) zum Abgleichen der genannten zweiten Porenpositionen (CP'₁-CP'_{N}) mit den Positionen der Oberflächenreferenzporen (RP'₁-RP'_{M}) eines Referenz-Oberflächenbildes (RSI), um ein Abgleichergebnis der Oberflächenporen (SPMS) zu erzielen,
- zweite Poren-Entscheidungsmittel (56), um anhand eines Vergleichs des Abgleichergebnisses der Oberflächenporen (SPMS) mit einem zweiten vorgegebenen Porenschwellenwert über eine erfolgreiche oder fehlgeschlagene auf Oberflächenporen basierende Identifizierung (SPFD) zu entscheiden,
- globale Entscheidungsmittel (57) zum Entscheiden über eine erfolgreiche oder fehlgeschlagene Fingeridentifizierung (ID) mit Hilfe der auf Makrofeatures basierenden Identifikation (MFD), der auf Poren basierenden Identifikation (PD), der auf Oberflächenmakrofeatures basierenden Identifikation (SMFD) und der auf Oberflächenporen basierenden Identifikation (SPD).

8. Einrichtung nach Anspruch 1, wobei die Erfassungsmittel ein konfokales Mikroskop umfassen.

9. Verfahren zum Identifizieren eines einzelnen Fingers (1), das die Folgenden Schritte umfasst:
- Erfassen (4) von mindestens einem Intrakutanbild (ISI) des einzelnen Fingers, wobei sich das genannte Intrakutanbild in einer Entfernung (D) innerhalb des Fingers befindet und Poren umfasst,
- Lokalisieren (5) der genannten Poren als einzelne Punkte in dem genannten fokussierten Intrakutanbild,
- Abgleichen (6) der genannten Porenpositionen mit Referenzporenpositionen aus einem fokussierten Referenz-Intrakutanbild, um ein Korrelationsergebnis zu erzielen,
- Entscheiden (7) über eine erfolgreiche oder fehlgeschlagene auf Poren basierenden Identifizierung (PI) anhand eines Vergleichs des Porenabgleichergebnisses (PMS) mit einem vorgegebenen Porenschwellenwert, wobei der Erfassungsschritt (4) in der Lage ist, eine Folge von Intrakutanbildern zu erfassen, bei der jedes Intrakutanbild einer bestimmten Tiefe in der Haut des Fingers entspricht, wobei der Lokalisierungsschritt (5) und der Abgleichschritt (6) nacheinander auf jedes Intrakutanbild der Folge angewandt werden, um die Positionen der Schweißporen eines vorhergehenden Bildes beim Suchen der Schweißporen in einem aktuellen Intrakutanbild zu berücksichtigen, und wobei der Entscheidungsschritt (7) in der Lage ist, die Positionen der Schweißporen aus den aufeinanderfolgenden Intrakutanbildern der Folge zu erfassen.

## Revendications

1. Système d'identification biométrique pour identifier un doigt individuel (1), ledit doigt comprenant une surface intérieure (2), ledit dispositif comprenant :
- des moyens d'acquisition (4) pour acquérir une image intra-cutanée (ISI), ladite image intra-cutanée se trouvant à l'intérieur du doigt à une certaine distance (D) de la surface intérieure (2) du doigt, ladite image intra-cutanée comprenant des pores sudoripares (P1, P2, P3) ;
- des moyens de localisation (5) pour localiser lesdits pores sudoripares sous la forme de points isolés dans ladite image intra-cutanée (ISI) ;
- des moyens d'appariement (6) pour apparier lesdites positions de pore (CP₁-CP_{N}) à des positions de pore de référence (RP₁-RP_{M}) d'une image intra-cutanée de référence (RI) pour produire une cote de corrélation de pore (PCS) ;
- des moyens de décision (7) pour décider d'une identification basée sur un pore (PI) positive ou négative à partir d'une comparaison de la cote d'appariement de pore (PMS) à un seuil de pore prédéterminé;
dans lequel les moyens d'acquisition (4) sont à même d'acquérir une suite d'images intra-cutanées, chaque image intra-cutanée correspondant à une profondeur particulière dans la peau du doigt, les moyens de localisation (5) et les moyens d'appariement (6) étant appliqués successivement à chaque image intra-cutanée de la suite de manière à tenir compte des positions de pore sudoripare d'une image précédente pour rechercher les pores sudoripares dans une présente image intra-cutanée, les moyens de décision (7) étant à même de rassembler les positions de pore sudoripare venant des images intra-cutanées successives de la suite.

2. Dispositif d'identification biométrique suivant la revendication 1, dans lequel ladite image intra-cutanée comprend des crêtes d'empreinte digitale et ledit dispositif comprend en outre :
- des moyens de localisation de macro-caractéristique (30) pour localiser des macro-caractéristiques situées sur lesdites crêtes d'empreinte digitale;
- des moyens d'appariement de macro-caractéristique (31) pour apparier lesdites positions de macro-caractéristique (MF₁-MF_{L}) à des positions de macro-caractéristique de référence (MF'₁-MF'_{K}) pour produire une cote d'appariement de macro-caractéristique (MFMS) ;
- des moyens de décision de macro-caractéristique (32) pour décider d'une identification basée sur une macro-caractéristique (MFD) positive ou négative à partir d'une comparaison de la cote d'appariement de macro-caractéristique (MFMS) à un seuil de macro-caractéristique prédéterminé.

3. Dispositif d'identification biométrique suivant la revendication 2, dans lequel les moyens de localisation de pore servent à localiser les pores sudoripares par rapport aux macro-caractéristiques.

4. Dispositif d'identification biométrique suivant la revendication 1, dans lequel les moyens d'acquisition (4) comprennent :
- une source de rayonnement (41) pour générer un faisceau de rayonnement (42) ;
- des moyens de focalisation (43) pour focaliser ledit faisceau de rayonnement (42) à la distance (D) par rapport à la surface interne (2) du doigt (1) ;
- des moyens de détection (44) pour détecter un faisceau de rayonnement réfléchi (45) réfléchi par le doigt (1).

5. Dispositif d'identification biométrique suivant la revendication 4, dans lequel la distance de focalisation par rapport à la surface intérieure du doigt est supérieure à 0,1 et inférieure à 0,5 mm.

6. Dispositif d'identification biométrique suivant la revendication 4, dans lequel lesdits moyens d'acquisition comprennent un microscope confocal.

7. Dispositif d'identification biométrique suivant la revendication 2, comprenant :
- des deuxièmes moyens d'acquisition (50) pour acquérir une image superficielle de la surface intérieure (2) du doigt (1) ;
- des deuxièmes moyens de localisation de macro-caractéristique (51) pour localiser des macro-caractéristiques situées sur lesdites crêtes d'empreinte digitale ;
- des deuxièmes moyens d'appariement de macro-caractéristique (54) pour apparier lesdites deuxièmes positions de macro-caractéristique (MF'₁-MF'_{L}) à des positions de macro-caractéristique de référence superficielle (RMF'₁-RMF'_{K}) pour produire une cote d'appariement de macro-caractéristique superficielle (SMFMS) ;
- des deuxièmes moyens de décision de macro-caractéristique (55) pour décider d'une identification basée sur une macro-caractéristique superficielle (SMFD) positive ou négative à partir d'une comparaison de la cote d'appariement de macro-caractéristique superficielle (SMFMS) à un deuxième seuil de macro-caractéristique prédéterminé;
- des deuxièmes moyens de localisation de pore (51) pour localiser lesdits pores sudoripares sous la forme de points isolés dans ladite image superficielle (SI) ;
- des deuxièmes moyens d'appariement de pore (52) pour apparier lesdites deuxièmes positions de pore (CP'₁-CP'_{N}) à des positions de pore de référence superficiel (RP'₁-RP'_{M}) d'une image superficielle de référence (RSI) pour produire une cote d'appariement de pore superficiel (SPMS) ;
- des deuxièmes moyens de décision de pore (56) pour décider d'une identification basée sur un pore superficiel (SPFD) positive ou négative à partir d'une comparaison de la cote d'appariement de pore superficiel (SPMS) à un deuxième seuil de pore prédéterminé ;
- des moyens de décision globale (57) pour décider d'une identification de doigt (ID) positive ou négative en utilisant l'identification basée sur une macro-caractéristique (MFD), l'identification basée sur un pore (PD), l'identification basée sur une macro-caractéristique superficielle (SMFD) et l'identification basée sur un pore superficiel (SPD).

8. Dispositif suivant la revendication 1, dans lequel lesdits moyens d'acquisition comprennent un microscope confocal.

9. Procédé permettant d'identifier un doigt individuel (1) comprenant les étapes suivantes :
- l'acquisition (4) d'au moins une image intra-cutanée (ISI) du doigt individuel, ladite image intra-cutanée se trouvant à une certaine distance (D) à l'intérieur du doigt et comprenant des pores;
- la localisation (5) desdits pores sous la forme de points isolés dans ladite image focalisée intra-cutanée ;
- l'appariement (6) desdites positions de pore à des positions de pore de référence d'une image focalisée intra-cutanée de référence pour produire une cote de corrélation ;
- la décision (7) d'une identification basée sur un pore (PI) positive ou négative à partir d'une comparaison de la cote d'appariement de pore (PMS) à un seuil de pore prédéterminé ;
dans lequel l'étape d'acquisition (4) sert à acquérir une suite d'images intra-cutanées, chaque image intra-cutanée correspondant à une profondeur particulière dans la peau du doigt, l'étape de localisation (5) et l'étape d'appariement (6) étant appliquées successivement à chaque image intra-cutanée de la suite de manière à tenir compte des positions de pore sudoripare d'une image précédente pour rechercher les pores sudoripares dans une présente image intra-cutanée, l'étape de décision (7) servant à rassembler les positions de pore sudoripare venant des images intra-cutanées successives de la suite.
